Europäisches Patentamt

European Patent Office

Office européen des brevets

(19)

(11) Veröffentlichungsnummer : **0 095 568
B1**

(12) **EUROPÄISCHE PATENTSCHRIFT**

(45) Veröffentlichungstag der Patentschrift :
07.08.85

(51) Int. Cl.⁴ : **H 01 R 43/02, B 23 K 1/08,
H 02 K 13/04**

(21) Anmeldenummer : 83102945.9

(22) Anmeldetag : 24.03.83

(54) **Vorrichtung für das Verlöten der Wicklung mit dem Kollektor elektrischer Maschinen.**

(30) Priorität : 02.06.82 BG 56866/82

(43) Veröffentlichungstag der Anmeldung :
07.12.83 Patentblatt 83/49

(45) Bekanntmachung des Hinweises auf die Patenterteilung : 07.08.85 Patentblatt 85/32

(84) Benannte Vertragsstaaten :
CH DE FR GB IT LI

(56) Entgegenhaltungen :
DE-A- 3 101 242
GB-A- 2 051 648

(73) Patentinhaber : INSTITUT PO METALOSNANIE I
TECHNOLOGIA NA METALITE
Tschapaev-Strasse No. 53
Sofia (BG)

(72) Erfinder : Mintschev, Pavel Markov, Dipl.-Ing.
"T. Petrov" 7, Block 30
Sofia 1113 (BG)
Erfinder : Christov, Christomir Denev, Dipl.-Ing.
Komplex Mladost-3 Block 317-2
Sofia (BG)
Erfinder : Balinov, Stoimen Stojanov, Dipl.-Ing.
Komplex Lenin Block 25-2
Sofia (BG)
Erfinder : Angelov, Michail Christov, Dipl.-Ing.
P. Enev-Strasse 47
Sofia (BG)
Erfinder : Jordanov, Nikolaj Vassilev
K. Veskova-Strasse 11
Sofia (BG)

(74) Vertreter : Finck, Dieter et al
Patentanwälte v. Füner, Ebbinghaus, Finck Mariahilfplatz 2 & 3
D-8000 München 90 (DE)

## Beschreibung

Die Erfindung betrifft eine Vorrichtung für das Verlöten der Wicklung mit dem Kollektor elektrischer Maschinen mit einer einphasigen magnetohydrodynamischen Pumpe, welche eine Verdichtungszone, ein Bad mit geschmolzenem Lot und einen Heizkörper aufweist, und mit einer Einrichtung, in welche der zu verlötende Rotor gelegt wird, wobei der Kern der einphasigen magnetohydrodynamischen Pumpe an seinem einen Ende von der Wicklung und an seinem anderen Ende von der Verdichtungszone umgeben ist, das Eingangsende der Verdichtungszone mit dem Boden des Bads verbunden ist, während ihr Ausgangsende an einem starr am Boden des Bads befestigten Unterbau angeschlossen ist, der ein Hohlzylinder ist, dessen innere Oberfläche am unteren Ende bezogen auf seine Achse unter einem Winkel abgeschrägt ist, der kleiner als 90° ist, und in dem konzentrisch eine Düse angeordnet ist, die aus einer Muffe und Hülse besteht, die fest verbunden sind, wobei die Muffe ein Hohlzylinder ist, dessen innere Oberfläche am oberen Ende unter einem Winkel abgeschrägt ist, der bezogen auf die Achse des Unterbaus kleiner als 90° ist und die Hülse ein Hohlzylinder mit einem konischen Boden ist, dessen äußere Oberfläche am oberen Ende abgeschrägt und parallel zum abgeschrägten oberen Teil der inneren Oberfläche der Muffe ist.

Eine bekannte Vorrichtung für das Verlöten der Wicklung mit dem Kollektor elektrischer Maschinen hat eine einphasige magnetohydrodynamische Pumpe mit einer Verdichtungszone und einem Bad mit geschmolzenem Lot sowie einem Heizkörper (DE-A-3 101 242). Der Magnetkreis der einphasigen magnetohydrodynamischen Pumpe ist an seinem einen Ende von der Wicklung und an seinem anderen Ende von der Verdichtungszone umgeben. Das Eingangsende der Verdichtungszone ist mit dem Boden des Bads, ihr Ausgangsende mit dem starr am Boden des Bads befestigten Unterbau verbunden. Der Unterbau ist ein hohler Zylinder mit konischem Boden und einer zentralen Öffnung, in welchem konzentrisch eine Düse angeordnet ist, die aus einer Muffe und einer Hülse besteht. Das obere Ende der inneren Oberfläche der Muffe ist unter einem Winkel abgeschrägt, der bezogen auf die Achse des Unterbaus kleiner als 90° ist. Das obere Ende der äußeren Oberfläche der Hülse ist abgeschrägt und zum abgeschrägten Ende der inneren Oberfläche der Muffe parallel.

Ein Nachteil der bekannten Vorrichtung besteht darin, daß die einphasige magnetohydrodynamische Pumpe beim Auswechseln des zu verlötenden Rotors ausgeschaltet werden muß, weil die Gefahr besteht, daß sich der Düsensitz mit Lot füllt. Dies führt zu einer Herabsetzung der Produktivität. Außerdem ist das elektromagnetische System der einphasigen magnetohydrodynamischen Pumpe offen, wodurch die energetischen Kennwerte schlecht sind und der Verbrauch an aktiven Werkstoffen hoch ist. Der Schutz des geschmolzenen Lots im Bad erfolgt durch Flußmittel. Für den Schutz gegen eine Oxidation des Stroms von geschmolzenem Lot, das die Kollektorlamellen umströmt, sind jedoch keine Maßnahmen vorgesehen.

Der Erfindung liegt die Aufgabe zugrunde, eine Vorrichtung für das Verlöten der Wicklung mit dem Kollektor elektrischer Maschinen zu entwickeln, welche die Vorteile der bekannten Vorrichtung aufweist, jedoch zusätzlich noch einen totalen Schutz des geschmolzenen Lots gegenüber Oxidation gewährleistet und eine erhöhte Produktivität bei herabgesetztem Verbrauch an aktiven Werkstoffen und Energie aufweist.

Diese Aufgabe wird erfindungsgemäß bei der Vorrichtung der eingangs genannten Art dadurch gelöst, daß oberhalb von dem abgeschrägten Teil des Unterbaus gleichmäßig in gleicher Höhe Öffnungen angeordnet sind, und daß das untere Ende der Muffe abgeschrägt und parallel zum unteren konischen Teil der inneren Oberfläche des Unterbaus ist, wobei die Muffe und der Unterbau durch eine bewegliche Passung verbunden sind. Zweckmäßigerweise ist am unteren Ende des Unterbaus die Verdichtungszone angeschlossen, die ein Rohr und ein zylindrisches Gefäß aufweist. Das zylindrische Gefäß besteht aus einer oberen Scheibe, einer unteren Scheibe und einer Seitenfläche. Die obere und die untere Scheibe sind nahe beieinander angeordnet und haben zentrale Öffnungen, die entsprechend an dem Kern und dem einen Ende des Rohrs angeschlossen sind. Das andere Ende des Rohrs ist am unteren Ende des Unterbaus angeschlossen. Der Boden des Bads ist mit der oberen Scheibe mit einer oder mehreren Metalleitungen verbunden.

Vorteilhafterweise sind das Rohr und die obere Scheibe aus ferromagnetischem Werkstoff hergestellt. Konzentrisch zur Wicklung und zur unteren Scheibe sind dabei zwei oder mehrere äußere Magnetkreise angeordnet, die an ihrem einen Ende mit dem Kern und an ihrem anderen Ende mit der oberen Scheibe verbunden sind. Das Rohr umgibt den Kern konzentrisch.

Als günstig hat sich erwiesen, wenn am oberen Teil des Unterbaus eine Schutzhaube befestigt ist. Sie besteht aus einem zylindrischen Teil und einem Deckel, die dicht angebracht sind. Der Deckel ist mit einer zentralen Öffnung versehen. Der zylindrische Teil ist teilweise im Lot eingetaucht, umgibt den Unterbau und ist starr damit durch Träger verbunden. Unterhalb des Deckels ist um die zentrale Öffnung ein Gasverteiler angeordnet, der aus einem ringförmigen Rohr mit Öffnungen besteht und über ein Reduzierventil mit einer Inertgasquelle verbunden ist.

Die erfindungemäße Vorrichtung hat den Vorteil, daß die Arbeitsproduktivität gesteigert und ihre Bedienung einfach ist, weil Zwangspausen im technologischen Zyklus beim Auswechseln des zu verlötenden Rotors vermieden werden, so daß eine Prozessautomatisierung leicht ausgeführt werden kann. Der Verbrauch an aktiven Werkstoffen und elektrischer Energie ist infolge der Herabsetzung des Magnetwiderstandes für den magnetischen Arbeitsstrom gering. Das geschmolzene Lot ist vor dem Oxidieren geschützt, so daß seine physikalischen und chemischen Werte erhalten bleiben. Außerdem wird eine Einsparung an Lot erzielt. Zudem ist die Einsatzzeit der Einrichtung, ohne daß eine Reinigung erforderlich ist, relativ lang.

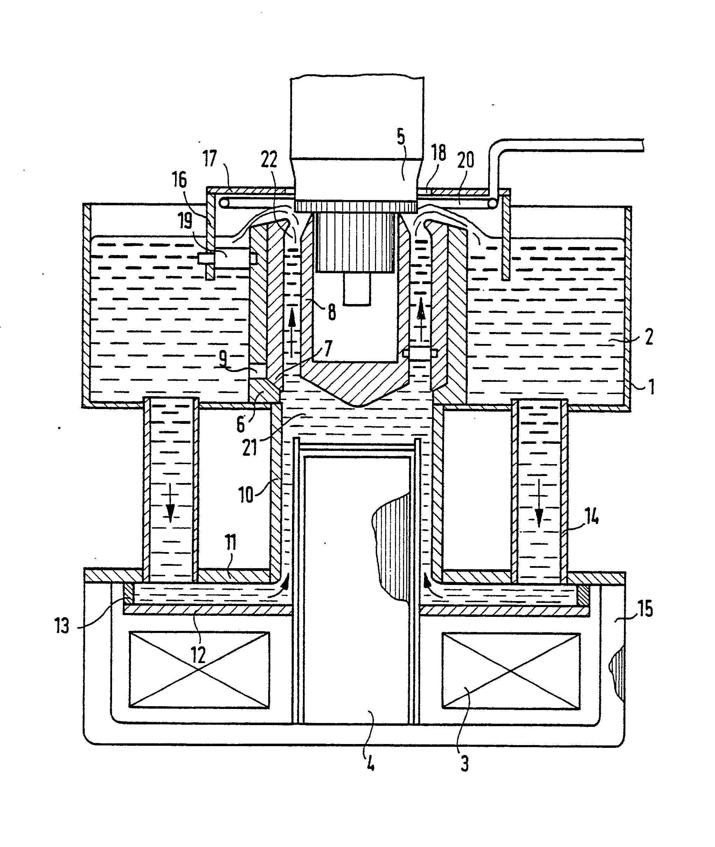

Anhand der Zeichnung, die im Schnitt ein Ausführungsbeispiel der Einrichtung in der Arbeitsstellung zeigt, wird die Erfindung näher erläutert.

Unterhalb des Bades 1 aus geschmolzenem Lot 2 und unterhalb von nicht gezeigten Elektrowiderstandsheizgeräten ist eine einphasige magnetohydrodynamische Pumpe für geschmolzene Metalle angeordnet, die eine Wicklung 3, einen Kern 4 und eine Verdichtungszone aufweist. Am Boden des Bads ist eine Einrichtung für das Einlegen eines zu verlötenden Rotors 5 angebracht, die einen Unterbau 6 und eine auswechselbare Düse aufweist. Der Unterbau 6 ist ein Hohlzylinder, dessen innere Oberfläche am unteren Ende in bezug auf seine Achse unter einem Winkel, der kleiner als 90° ist, abgeschrägt ist. Die Düse besteht aus einer Muffe 7 und einer Hülse 8, die starr miteinander verbunden sind. Die Muffe 7 ist ein Hohlzylinder, dessen innere Oberfläche im oberen Teil unter einem Winkel, der kleiner als 90° ist, in bezug auf die Achse des Unterbaus 6 abgeschrägt ist. Die Hülse 8 ist ein Hohlzylinder mit konischem Boden, dessen äußere Oberfläche am oberen Ende abgeschrägt und parallel zum abgeschrägten oberen Ende der inneren Oberfläche der Muffe 7 ist. Der Kern 4 ist an seinem einen Ende von der Wicklung 3, und an seinem anderen Ende von der Verdichtungszone umgeben. Oberhalb des abgeschrägten Teils des Unterbaus 6 sind gleichmäßig in gleicher Höhe Öffnungen 9 angeordnet. Das untere Ende der Muffe 7 ist abgeschrägt und zum unteren konischen Teil der inneren Oberfläche des Unterbaus 6 parallel. Die Muffe 7 und der Unterbau 6 sind durch eine bewegliche Passung verbunden. Am unteren Ende des Unterbaus 6 ist die Verdichtungszone angeschlossen. Sie hat ein Rohr 10 und ein zylindrisches Gefäß. Das zylindrische Gefäß besteht aus einer oberen Scheibe 11, einer unteren Scheibe 12 und einer Seitenfläche 13. Die obere Scheibe 11 und die untere Scheibe 12 sind nahe beieinander angeordnet und haben zentrale Öffnungen, die entsprechend an dem Kern 4 und an dem einen Ende des Rohrs 10 angeschlossen sind. Das andere Ende des Rohrs 10 ist am unteren Ende des Unterbaus 6 angeschlossen. Der Boden des Bads 1 ist mit der oberen Scheibe 11 mit einem oder mehreren Metalleitungen 14 verbunden. Das Rohr 10 und die obere Scheibe 11 sind aus ferromagnetischem Werkstoff hergestellt. Konzentrisch zur Wicklung 3 und zur Seitenfläche 13 sind zwei oder mehrere äußere Magnetkreise 15 angeordnet, die an ihrem einen Ende mit dem Kern 4, und an ihrem anderen Ende mit der oberen Scheibe 11 verbunden sind. Das Rohr 10 umgibt konzentrisch den Kern 4. Am oberen Teil des Unterbaus 6 ist eine Schutzhaube befestigt, die aus einem zylindrischen Teil 16 und einem Deckel 17 besteht, der daran dicht angebracht ist. Der Deckel 17 ist mit einer zentralen Öffnung 18 versehen. Der zylindrische Teil 16 ist teilweise in das Lot 2 eingetaucht, umgibt den Unterbau 6 und ist an ihm starr mit einem Träger 19 befestigt. Unterhalb des Deckels 17 ist um die zentrale Öffnung 18 ein Gasverteiler 20 angeordnet, der aus einem ringförmigen Rohr mit Öffnungen besteht, das durch ein Reduzierventil einer Inertgasquelle verbunden ist. Zwischen dem Unterbau 6 und der Hülse 8 ist ein Konfusor 21 ausgebildet. Die oberen abgeschrägten Enden der Muffe 7 und der Hülse 8 bilden einen ringförmigen Kanal 22.

Die erfindungsgemäße Vorrichtung arbeitet wie folgt:

Das anfängliche Schmelzen des Lots 2 im Bad 1 erfolgt durch die Elektrowiderstandsheizkörper oder durch Induktion durch die einphasige magnetohydrodynamische Pumpe. Nach dem Schmelzen des Lots wird die Düse in eine obere Lage gehoben (entsprechend dem Archimedes'schen Gesetz). Die Muffe 7 kommt in Berührung mit dem Deckel 17. Auf diese Weise wird ein geschlossener Raum gebildet, der vom Unterbau 6, der Oberfläche des geschmolzenen Lots 2, der Schutzhaube und der Muffe 7 begrenzt wird. Durch den Gasverteiler 20 wird dieser Raum mit Schutzgas, zum Beispiel Stickstoff, von entsprechend niedrigem Druck gefüllt. Das geschmolzene Metall 2, das vom Boden des Bads 1 angesaugt wird, fließt durch die Metalleitungen 14, die Verdichtungszone, die Öffnungen 9 und dann zurück zum Bad 1. Der Zutritt atmosphärischer Luft zum Lot 2 ist unterbrochen. Beim Einlegen des zu verlötenden Rotors 5 im Sitz der Hülse 8, sinkt die Düse unter der Wirkung seines Gewichts und verschließt die Öffnungen 9. Das geschmolzene Lot 2 fließt durch den ringförmigen Kanal 22 ab, umgießt gleichzeitig alle Lamellen des Kollektors und fließt zurück zum Bad 1. Bei der Abwärtsbewegung der Düse löst sich die Muffe 7 von dem Deckel 17. Das Schutzgas beginnt zwischen das geschmolzene Lot 2 und den Deckel zu strömen, wodurch ein schützendes Gaspolster gebildet wird. Nach Beendigung des Lötvorgangs wird der Rotor 5 aus der Hülse 8 herausgezogen, womit der Arbeitszyklus endet und der Ausgangszustand der Vorrichtung wieder hergestellt wird.

Falls es erforderlich ist, einen Rotor 5 mit einem Kollektordurchmesser zu löten, der sich von dem vorhergehenden unterscheidet, wird die Düse durch eine andere mit entsprechendem Durchmesser des Sitzes in der Hülse 8 ausgewechselt. Danach wird der beschriebene Arbeitszyklus wiederholt.

**Patentansprüche**

1. Vorrichtung für das Verlöten der Wicklung mit dem Kollektor (5) elektrischer Maschinen mit einer einphasigen magnetohydrodynamischen Pumpe, welche eine Verdichtungszone, ein Bad (1) mit geschmolzenem Lot (2) und einen Heizkörper aufweist, und mit einer Einrichtung, in welche der zu verlötende Rotor (5) gelegt wird, wobei der Kern (4) der einphasigen magnetohydrodynamischen Pumpe an seinem einen Ende von der Wicklung (3) und an seinem anderen Ende von der Verdichtungszone umgeben ist, das Eingangsende der Verdichtungszone mit dem Boden des Bads (1) verbunden ist, während ihr Ausgangsende an einem starr am Boden des Bads (1) befestigten Unterbau (6) angeschlossen ist, der ein Hohlzylinder ist, dessen innere Oberfläche am unteren Ende bezogen auf seine Achse unter einem Winkel abgeschrägt ist, der kleiner als 90° ist, und in dem konzentrisch eine Düse (7, 8) angeordnet ist, die aus einer Muffe (7) und Hülse (8) besteht, die fest verbunden sind, wobei die Muffe (7) ein Hohlzylinder ist, dessen innere Oberfläche am oberen Ende unter einem Winkel abgeschrägt ist, der bezogen auf die Achse des Unterbaus kleiner als 90° ist, und die Hülse (8) ein Hohlzylinder mit einem konischen Boden ist, dessen äußere Oberfläche am oberen Ende abgeschrägt und parallel zum abgeschrägten oberen Teil der inneren Oberfläche der Muffe (7) ist, dadurch gekennzeichnet, daß oberhalb von dem abgeschrägten Teil des Unterbaus (6) gleichmäßig in gleicher Höhe Öffnungen (9) angeordnet sind, und daß das untere Ende der Muffe (7) abgeschrägt und parallel zum unteren konischen Teil der inneren Oberfläche des Unterbaus (6) ist, wobei die Muffe (7) und der Unterbau (6) durch eine bewegliche Passung verbunden sind.

2. Vorrichtung nach Anspruch 1, dadurch gekennzeichnet, daß am unteren Ende des Unterbaus (6) eine Verdichtungszone angeschlossen ist, die ein Rohr (10) und ein zylindrisches Gefäß aufweist, das aus einer oberen Scheibe (11), einer unteren Scheibe (12) und einer Seitenfläche (13) besteht, wobei die untere Scheibe (12) und die obere Scheibe (11) nahe beieinander angeordnet sind und zentrale Öffnungen aufweisen, die dem Kern (4) und dem einen Ende des Rohrs (10) zugeordnet sind, dessen anderes Ende am unteren Ende des Unterbaus (6) angeschlossen ist, und wobei der Boden des Bads (1) mit der oberen Scheibe (11) über eine oder mehrere Metalleitungen (14) verbunden ist.

3. Vorrichtung nach Anspruch 2, dadurch gekennzeichnet, daß das Rohr (10) und die obere Scheibe (11) aus ferromagnetischem Werkstoff bestehen, und daß konzentrisch zu der Wicklung (3) und der Seitenfläche (13) zwei oder mehr äußere Magnetkreise (15) angeordnet sind, die an ihrem einen Ende mit dem Kern (4) und an ihrem anderen Ende mit der oberen Scheibe (11) verbunden sind, wobei das Rohr (10) den Kern (4) konzentrisch umgibt.

4. Vorrichtung nach einem der Ansprüche 1 bis 3, dadurch gekennzeichnet, daß am oberen Teil des Unterbaus (6) eine Schutzhaube befestigt ist, die aus einem zylindrischen Teil (16) und einem Deckel (17) besteht, der daran dicht angebracht ist, wobei der Deckel (17) eine zentrale Öffnung (18) aufweist und der zylindrische Teil (16) teilweise in das Lot (2) eingetaucht ist, den Unterbau (6) umgibt und daran starr mit einem Träger (19) befestigt ist, und daß unterhalb des Deckels (17) um die zentrale Öffnung (18) ein Gasverteiler (20) angeordnet ist, der von einem ringförmigen Rohr mit Öffnungen gebildet wird, das über ein Reduzierventil mit einer Inertgasquelle verbunden ist.

**Claims**

1. Apparatus for soldering the winding to the collector (5) of electrical machines having a single-phase magneto-hydrodynamic pump which has a compression zone, a bath (1) with melted solder (2) and a heating element, and having a device in which is laid the rotor (5) to be soldered, whereby the core (4) of the single-phase magneto-hydrodynamic pump is surrounded at one end by the winding (3) and at its other end by the compression zone, the input end of the compression zone is connected to the floor of the bath (1) whilst its output end is connected to a substructure (6) rigidly secured to the base of the bath (1), this substructure being a hollow cylinder whose inner surface at the lower end is bevelled, with respect to its axis, at an angle which is smaller than 90°, and in which there is concentrically arranged a nozzle (7, 8) which comprises a socket (7) and a housing (8) which are firmly connected, wherein the socket (7) is a hollow cylinder whose inner surface is bevelled at the upper end at an angle which, with respect to the axis of the substructure, is smaller than 90°, and the housing (8) is a hollow cylinder with a conical base, whose outer surface is bevelled at the upper end and is parallel to the bevelled upper part of the inner surface of the socket (7), characterised in that above the bevelled part of the substructure (6) apertures (9) are arranged uniformly at the same height, and in that the lower end of the socket (7) is bevelled and is parallel to the lower conical part of the inner surface of the substructure (6), wherein the socket (7) and the substructure (6) are connected by a movable fit.

2. Apparatus according to claim 1, characterised in that at the lower end of the substructure (6) there is connected a compression zone which has a pipe (10) and a cylindrical vessel which comprises an upper disc (11), a lower disc (12) and a side face (13), whereby the lower disc (12) and the upper disc (11) are arranged close to each other and have central apertures which are associated with the core (4) and the one end of the pipe (10), the other end of which is attached at the lower end of the substructure (6), and wherein the base of the bath (1) is connected to the upper disc (11) by means of one or several metal pipes (14).

3. Apparatus according to claim 1, characterised in that the pipe (10) and the upper disc (11) consist of ferromagnetic material, and in that two or more outer magnetic circuits (15) are arranged concentrically to the winding (3) and the side face (13), which are connected at their one end to the core (4) and at their other end to the upper disc (11), whereby the pipe (10) concentrically surrounds the core (4).

4. Apparatus according to one of claims 1 to 3, characterised in that at the upper part of the substructure (6) a protective hood is secured which comprises a cylindrical part (16) and a cover (17) which is fitted tightly thereto, whereby the cover (17) has a central aperture (18), and the cylindrical part (16) is partially immersed in the solder (2), surrounds the substructure (6) and is secured to this rigidly with a carrier (19), and in that below the cover (17) round the central aperture (18) a gas distributor (20) is arranged which is formed from an annular pipe with apertures, which is connected to an inert gas source by means of a pressure-reducing valve.

### Revendications

1. Dispositif pour le soudage de l'enroulement au collecteur (5) de machines électriques, équipé d'une pompe magnétohydrodynamique monophasée qui présente une zone de compression, un bac (1) contenant de la soudure en fusion (2), et un élément chauffant, et d'une structure dans laquelle est placé le rotor à souder (5), le noyau (4) de la pompe magnétohydrodynamique monophasée étant entouré, à l'une de ses extrémités, par l'enroulement (3) et, à sa seconde extrémité, par la zone de compression, l'extrémité d'entrée de la zone de compression étant reliée au fond du bac (1), tandis que son extrémité de sortie est raccordée à une embase (6) fixée rigidement au fond du bac (1), embase qui a la forme d'un cylindre creux dont la surface latérale intérieure est chanfreinée à l'extrémité inférieure, sous un angle inférieur à 90° par rapport à son axe et dans laquelle est montée concentriquement une buse (7, 8) composée d'un manchon (7) et d'une douille (8) qui sont reliés rigidement l'un à l'autre, le manchon (7) étant un cylindre creux dont la surface latérale intérieure s'incline, à l'extrémité supérieure, sous un certain angle qui, par rapport à l'axe de l'embase, est inférieur à 90°, tandis que la douille (8) est un cylindre creux à fond conique dont la surface latérale extérieure est chanfreinée à l'extrémité supérieure et est parallèle à la partie supérieure inclinée de la surface latérale intérieure du manchon (7), caractérisé en ce qu'au-dessus de la partie chanfreinée de l'embase (6), sont ménagés des orifices (9) disposés à intervalles réguliers et à même hauteur, et en ce que l'extrémité inférieure du manchon (7) est chanfreinée et parallèle à la partie inférieure conique de la surface latérale intérieure de l'embase (6), le manchon (7) et l'embase (6) étant réunis par un ajustement mobile.

2. Dispositif selon la revendication 1, caractérisé en ce qu'à l'extrémité inférieure de l'embase (6), est raccordée une zone de compression qui comporte un tube (10) et un récipient cylindrique composé d'un disque supérieur (11), d'un disque inférieur (12) et d'une paroi latérale (13), le disque inférieur (12) et le disque supérieur (11) étant monté à proximité l'un de l'autre et présentant des ouvertures centrales, qui sont adjointes au noyau (4) et à l'une des extrémités du tube (10), dont la seconde extrémité est raccordée à l'extrémité inférieure de l'embase (6), tandis que le fond du bac (1) est relié au disque supérieur (11) par l'intermédiaire d'un ou de plusieurs conduits métalliques (14).

3. Dispositif selon la revendication 2, caractérisé en ce que le tube (10) et le disque supérieur (11) sont faits d'un matériau ferromagnétique, et en ce que deux circuits magnétiques extérieurs (15) ou davantage sont montés concentriquement à l'enroulement (3) et à la paroi latérale (13), ces circuits étant reliés, à l'une de leurs extrémités, au noyau (4) et, à leur seconde extrémité, au disque supérieur (11), tandis que le tube (10) entoure concentriquement le noyau (4).

4. Dispositif selon l'une des revendications 1 à 3, caractérisé en ce que sur la partie supérieure de l'embase (6), est fixé un capot de protection qui se compose d'une partie cylindrique (16) et d'un couvercle (17) monté sur celle-ci de façon étanche, le couvercle (17) présentant une ouverture centrale (18), tandis que la partie cylindrique (16) est partiellement immergée dans la soudure (2), entoure l'embase (6) et est rigidement fixée à celui-ci par une poutrelle (19), et en ce qu'un distributeur de gaz (20) est monté au-dessous du couvercle (17) autour de l'ouverture centrale (18), ce distributeur étant constitué par un tube annulaire percé d'orifices et relié par l'intermédiaire d'une soupape de détente à une source de gaz inerte.